# EUROPÄISCHE PATENTSCHRIFT

(11) **EP 0 473 624 B1**
(45) Veröffentlichungstag und Bekanntmachung des Hinweises auf die Patenterteilung: **25.08.1993**
(21) Anmeldenummer: 90907015.3
(22) Anmeldetag: 14.05.1990
(51) Int. Cl.: B64F 1/22

(54) **VERFAHREN UND VORRICHTUNG ZUM AUFNEHMEN EINES FLUGZEUGBUGFAHRWERKS DURCH EINEN FLUGZEUGSCHLEPPER**
PROCESS AND DEVICE FOR ATTACHING AN AIRCRAFT NOSE LANDING GEAR TO AN AIRCRAFT TRACTOR
PROCEDE ET DISPOSITIF POUR FIXER LE TRAIN D'ATTERRISSAGE AVANT D'UN AVION A UN REMORQUEUR D'AVIONS

(30) Priorität: 26.05.1989 DE 3917255
(43) Veröffentlichungstag der Anmeldung: 11.03.1992
(73) Patentinhaber: SCHOPF MASCHINENBAU GMBH, D-73760 Ostfildern (DE)
(72) Erfinder: WICHERT, Benno, D-7063 Welzheim (DE)
(74) Vertreter: Wolf, Eckhard, Dr.-Ing.
(86) Internationale Anmeldenummer: EP9000775
(87) Internationale Veröffentlichungsnummer: WO9014266

(56) Entgegenhaltungen:
- EP-A- 0 126 386
- EP-A- 0 276 779
- EP-A- 0 309 760
- WO-A-87/06910

## Beschreibung

Die Erfindung betrifft ein Verfahren zum Aufnehmen eines mindestens ein Bugrad aufweisenden Flugzeugbugfahrwerks durch einen Flugzeugschlepper, bei dem der Flugzeugschlepper und das Bugrad auf einer Fahrbahn bis zum Anschlagen einander angenähert werden, bei dem eine das Bugrad aufnehmende Schaufel des Flugzeugschleppers auf die Fahrbahn oder bis in deren Nähe abgesenkt und nach Aufnahme des Bugrads zusammen mit dem Bugrad angehoben wird. Die Erfindung betrifft weiter einen Flugzeugschlepper mit einem, eine gabelförmige Ausnehmung aufweisenden Fahrgestell, sowie mit einer im Bereich der Ausnehmung angeordneten heb- und senkbaren Schaufel zur Aufnahme eines auf der Fahrbahn bis in eine Anschlagposition an den Flugzeugschlepper angenäherten, mindestens ein Bugrad aufweisenden Flugzeugbugfahrwerks.

Bei einem bekannten Flugzeugschlepper dieser Art (DE-OS 3801855) wird das Bugrad eines Flugzeugs beim Aufnehmen von den Greifarmen einer Greif- und Einzugsvorrichtung hintergriffen und auf die abgesenkte Schaufel eines stillstehenden Flugzeugschleppers gezogen. Da das Flugzeug zum Aufnehmen des Bugrads bewegt werden muß, kann das Flugzeugbugrad erst dann auf die Schaufel gezogen werden, wenn bereits alle Passagiere Platz genommen haben und die Passagierbrücken zurückgezogen sind. Dies kann bei der Abfertigung des startbereiten Flugzeugs zu Verzögerungen führen. Außerdem müssen die bekannten Flugzeugschlepper sehr schwer gebaut werden, damit die Haftreibungskraft des gebremsten Flugzeugschleppers beim Heranziehen des Bugrads stets größer ist als der Losbrechwiderstand des sehr viel schwereren Flugzeugs. Zusätzlich bewirken die an den nachgiebigen Laufflächen des Bugrads angreifenden Stützrollen beim Einfahren der Greifarme keine kontinuierliche, sondern eine ruckweise Vorwärtsbewegung des Flugzeugs.

Der Erfindung liegt daher die Aufgabe zugrunde, ein Verfahren zum Aufnehmen eines Flugzeugbugfahrwerks durch einen Flugzeugschlepper zu entwickeln, bei dem das Flugzeug nicht bewegt werden muß, und den bekannten Flugzeugschlepper dahingehend zu verbessern, daß er das Flugzeugbugfahrwerk eines stehenden Flugzeugs aufnehmen kann.

Zur Lösung dieser Aufgabe werden die im Kennzeichenteil der Ansprüche 1 und 10 bzw. 14 und 41 angegebenen Merkmale vorgeschlagen. Weitere vorteilhafte Ausgestaltungen und Weiterbildungen der Erfindung ergeben sich aus den abhängigen Ansprüchen.

Der Erfindung liegt der Gedanke zugrunde, beim Aufnehmen des Flugzeugbugfahrwerks durch den Flugzeugschlepper Verschiebebewegungen zwischen Flugzeug und Flugzeugschlepper auf der Fahrbahn zu vermeiden. Um dies zu erreichen wird gemäß der Erfindung vorgeschlagen, daß nach dem Annähern der Flugzeugschlepper und das Bugrad auf der Fahrbahn stehend unverschiebbar miteinander gekuppelt werden und daß anschließend die abgesenkte Schaufel relativ zum Flugzeugschlepper verschoben und dabei vollständig unter das Bugrad geschoben wird.

Die Schaufel wird zweckmäßig quer zur Drehachse des Bugrads untergeschoben, wobei das ungebremste Bugrad in eine Drehbewegung versetzt wird.

Vor dem Kuppeln kann der Flugzeugschlepper bis zum Anschlagen an das Bugrad herangefahren oder das Bugrad vom Flugzeugschlepper aus hintergriffen und der Flugzeugschlepper bis zum Anschlagen an das Bugrad herangezogen werden. Zum Kuppeln wird zweckmäßig das an einem Anschlag des Flugzeugschleppers anliegende Bugrad vom Flugzeugschlepper aus hintergriffen und gegen den Anschlag gedrückt.

Das mit dem Flugzeugschlepper gekuppelte Bugrad kann vor dem Unterschieben der Schaufel vom Flugzeugschlepper aus angehoben, vorzugsweise von der Fahrbahn abgehoben und nach dem Unterschieben der Schaufel auf dieser abgesetzt werden.

Vorteilhafterweise wird das Bugrad nach dem Unterschieben der Schaufel unverschiebbar gegenüber der Schaufel gesichert, vorzugsweise durch Andrücken des Bugrads auf die Schaufel. Während des Schleppbetriebs kann die zusammen mit dem Bugrad angehobene Schaufel gegenüber dem Flugzeugschlepper verriegelt werden. Beim Abkuppeln des Flugzeugschleppers vom Bugrad wird die Schaufel zuerst abgesenkt und dann zweckmäßig unter dem hierbei in eine Drehbewegung versetzten Bugrad weggezogen.

Eine bevorzugte Ausgestaltung eines Flugzeugschleppers sieht vor, daß der Flugzeugschlepper in der Anschlagposition mit dem auf der Fahrbahn stehenden Flugzeugbugrad unverschiebbar kuppelbar ist, und daß die abgesenkte Schaufel relativ zum Fahrgestell des Flugzeugschleppers vollständig unter das Bugrad verschiebbar ist. Zweckmäßig ist die Schaufel quer zur Drehachse des Bugrads unter das ungebremste Bugrad verschiebbar. Als Widerlager kann dabei eine das Bugrad drehbar haltende Greif- und Einspannvorrichtung dienen.

Gemäß einer weiteren bevorzugten Ausgestaltung der Erfindung ist die Schaufel in einer gegenüber dem Fahrgestell heb- und senkbaren Hubgabel längsverschiebbar gelagert. Die Hubgabel oder die Schaufel selbst kann bei angehobener Schaufel vorzugsweise in unterschiedlichen Hubhöhen gegenüber dem Fahrgestell verriegelbar sein.

Vorteilhafterweise weist die abgesenkte Schaufel eine geringe Bodenfreiheit auf, so daß sie beim Unterschieben unter das Bugrad nicht auf der Fahrbahn gleitet. Eine dem Bugrad zugewandte, schräg zur Fahrbahn weisende Unterschiebkante erleichtert dabei das Unterschieben unter das Bugrad.

Gemäß einer vorteilhaften Ausgestaltung der Erfindung weist die Schaufel eine über die Schaufeloberseite überstehende keilförmige oder konkav gerundete Anschlagfläche für das auf der Schaufel stehende Bugrad auf.

Eine weitere vorteilhafte Ausgestaltung der Erfindung sieht vor, daß das Bugrad nach dem Kuppeln vom Flugzeugschlepper aus anhebbar, vorzugsweise von der Fahrbahn abhebbar ist. Das Anheben des Bugrads erfolgt dabei zweckmäßig mit Hilfe der Greif- und Einspannvorrichtung. Die Greif- und Einspannvorrichtung kann vorteilhafterweise auch dazu dienen, das Bugrad auf der vollständig untergeschobenen Schaufel zu sichern, vorzugsweise durch Andrücken gegen die Schaufel.

Um beim Unterschieben der Schaufel eine Drehbewegung des Bugrads zu ermöglichen, weist der Flugzeugschlepper gemäß einer weiteren bevorzugten Ausgestaltung der Erfindung mindestens eine, in der Anschlagposition gegen einen dem Flugzeugschlepper zugewandten Teil der Lauffläche des Bugrads anliegende Anschlagrolle mit einer quer zur Längsachse des Flugzeugschleppers ausgerichteten Drehachse auf. Zur Verringerung der Flächenpressung können mehrere, jeweils paarweise an einer Halterung um eine zu ihrer Drehachse parallele Achse verschwenkbar angeordnete Anschlagrollen vorgesehen werden. Zweckmäßig ist die Anschlagrolle bzw. die Halterung der Anschlagrollen in Anschlagrichtung begrenzt gegen einen Stoßdämpfer verschiebbar.

Um den Flugzeugschlepper bis zum Anschlagen an das Bugrad heranzuziehen und um den Flugzeugschlepper mit dem am Anschlag anliegenden Bugrad zu kuppeln, weist der Flugzeugschlepper gemäß einer weiteren bevorzugten Ausgestaltung der Erfindung mindestens einen, hinter das innerhalb der Ausnehmung stehende Bugrad schwenkbaren Greifarm auf, der mit mindestens einer drehbaren, gegen die Lauffläche des Bugrads anlegbaren Andrückrolle versehen ist. Eine weitere bevorzugte Ausgestaltung der Erfindung sieht vor, daß auf beiden Seiten der Ausnehmung ein Greifarm um je eine senkrechte Achse schwenkbar an einem Greifarmträger angelenkt ist, wobei die beiden hinter das Bugrad geschwenkten Greifarme miteinander verriegelbar sind.

Gemäß einer weiteren bevorzugten Ausgestaltung der Erfindung können die miteinander verriegelten Greifarme in Richtung der Anschlagrolle gezogen werden, so daß unter Einspannen des Bugrads zwischen Andrückrollen und Anschlagrolle der Flugzeugschlepper mit dem Bugrad kuppelbar ist. Um die Greifarme in Richtung der Anschlagrolle zu ziehen ist zweckmäßig ein teleskopierbarer, mit den Greifarmträgern sowie mit der Halterung der Anschlagrolle verbindbarer Spannzylinder vorgesehen.

Beim Aufnehmen des Flugzeugbugfahrwerks durch den Flugzeugschlepper kann auf das Kuppeln von Flugzeugschlepper und Bugrad verzichtet werden, wenn während des Aufnahmevorgangs, mindestens aber während des Unterschiebens der abgesenkten Schaufel eine Verschiebebewegung zwischen Flugzeugschlepper und Bugrad dadurch verhindert wird, daß sowohl der Flugzeugschlepper als auch das Flugzeugbugfahrwerk unverschiebbar gegenüber der Fahrbahn festgehalten werden. Dazu können die Bremsen des Flugzeugschleppers und/oder eines Teils der weiteren Flugzeugräder betätigt werden.

Das Bugrad wird hier vorteilhafterweise erst nach dem Anheben der Schaufel gegen ein Verschieben auf der Schaufel gesichert, vorzugsweise durch Einspannen des Bugrades zwischen der Schaufel und mindestens einem gegen das Bugrad anliegenden Anschlag.

Eine bevorzugte Ausgestaltung eines Flugzeugschleppers für den Push-back-Betrieb sieht vor, daß die Schaufel mit ihrer Oberseite eine Unterstützungsfläche für den Transport des angehobenen Bugrads bildet und daß die Schaufel mit der Unterstützungsfläche bis in Bodennähe absenkbar und bei feststehendem Flugzeugschlepper relativ zu dessen Fahrgestell vollständig unter das Bugrad verschiebbar ist. Durch die Absenkbarkeit der Schaufel bis in Bodennähe wird gewährleistet, daß die beim Unterschieben der Schaufel parallel zur Fahrbahn auf das Flugzeugbugrad ausgeübte Kraft die Haftreibung zwischen den weiteren Flugzeugrädern und der Fahrbahn nicht übersteigt, so daß ein Widerlager hinter dem Bugrad nicht erforderlich ist. Eine weitere Reduzierung der beim Unterschieben der Schaufel auf das Bugrad einwirkenden Kraft kann dadurch erreicht werden, daß die Schaufel quer zur Drehachse des Bugrads unter das ungebremste Bugrad verschiebbar ist.

Im folgenden wird die Erfindung anhand mehrerer, in der Zeichnung in schematischer Weise dargestellter Ausführungsbeispiele näher erläutert. Es zeigen
- Fig. 1: einen senkrechten Längsschnitt entlang der Schnittlinie A-A der Fig. 2 durch den hinteren Teil eines Flugzeugschleppers mit der das Flugzeugbugfahrwerk aufnehmenden Schaufel;
- Fig. 2: eine Draufsicht auf den Flugzeugschlepper nach Fig. 1 in teilweise geschnittener Darstellung;
- Fig. 3: einen senkrechten Schnitt durch den hinteren Teil eines Flugzeugschleppers, dessen Hubgabel in angehobener Stellung um eine im wesentlichen zur Flugzeugschlepperlängsachse parallele Drehachse begrenzt verschwenkbar ist;
- Fig. 4: einen Längsschnitt durch den hinteren Teil eines Flugzeugschleppers mit einer in Rollenführungen senkrecht verschiebbar gelagerten Hubgabel;
- Fig. 5: eine Seitenansicht einer Anschlagrollenhalterung mit mehreren Anschlagrollen;
- Fig. 6: einen Längsschnitt durch den hinteren Teil eines Flugzeugschleppers, bei welchem die Hubgabel unabhängig von der Greif- bzw. Einspannvorrichtung heb- und senkbar ist;
- Fig. 7: einen Längsschnitt durch den hinteren Teil eines Flugzeugschleppers, bei welchem das Bugrad während des Aufnehmens nicht hintergriffen wird.

Der in der Zeichnung dargestellte, vorzugsweise hydrostatisch angetriebene Flugzeugschlepper 10 besteht im wesentlichen aus einem Fahrgestell 12 mit einer lenkbaren Vorderachse 14 und zwei einzeln aufgehängten Hinterrädern 16,16', einer Fahrerkabine 18 sowie einer in einer U-förmigen, nach hinten offenen Ausnehmung 20 des Fahrgestells 12 angeordneten Aufnahmevorrichtung 22 für das Bugrad 24 eines Flugzeugbugfahrwerks.

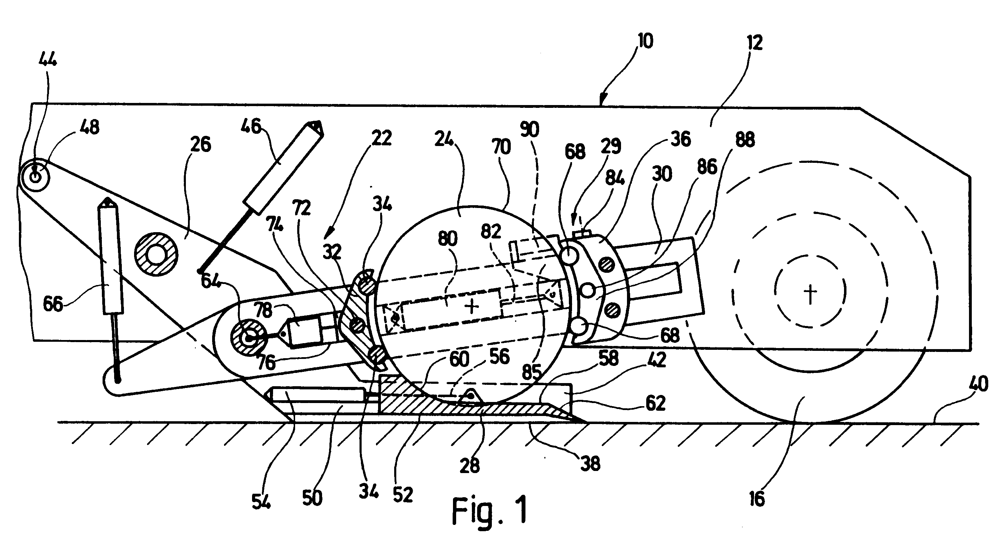

Die Aufnahmevorrichtung 22 weist eine gegenüber dem Fahrgestell 12 heb- und senkbare Hubgabel 26, und eine in der Hubgabel 26 längsverschiebbar gelagerte Schaufel 28 auf. Bei den in den Fig. 1 bis 6 dargestellten Flugzeugschleppern ist zusätzlich eine Greif- bzw. Einspannvorrichtung 29 für das Bugrad 24 vorgesehen, welche mit zwei an der Hubgabel 26 schwenkbar gelagerten Tragholmen 30,30', einer zwischen den beiden Tragholmen 30,30' angeordneten Anschlagrollenhalterung 32 sowie zwei von den Tragholmen 30,30' aus hinter das Bugrad schwenkbaren Greifarmen 36 versehen ist.

Die Hubgabel 26 der in Fig. 1 dargestellten Aufnahmevorrichtung 22 besteht aus zwei biegesteifen, bei abgesenkter Hubgabel 26 mit einer Auflagefläche 38 auf der Fahrbahn 40 aufliegenden Seitenwangen 42, die in ihrem vorderen, der Fahrerkabine 18 zugewandten Bereich starr miteinander verbunden sind. Die Hubgabel 26 ist in Lagern 48 des Fahrgestells 12 um eine Schwenkachse 44 schwenkbar gelagert und kann mittels eines oder mehrerer Hubzylinder 46 aus ihrer abgesenkten Lage (Fig. 1) so weit angehoben werden, daß die Auflagefläche 38 etwa die gleiche Bodenfreiheit aufweist wie das Fahrgestell 12.

Die das Bugrad 24 tragende Schaufel 28 überbrückt den Zwischenraum zwischen den beiden Seitenwangen 42 und ist in Führungen 50 der Seitenwangen 42 längsverschiebbar gelagert, wobei die Unterseite 52 der abgesenkten Schaufel 28 einen geringen Abstand von der Fahrbahn 40 aufweist (Fig. 1). Die Längsverschiebung der Schaufel 28 erfolgt über zwei mit je einer der Seitenwangen 42 verbundene Schaufelzylinder 54, deren Kolbenstangen 56 an der Schaufel 28 angelenkt sind. Die Schaufel 28 weist eine über die Schaufeloberseite 58 überstehende konkav gerundete Anschlagfläche 60 für das auf der Schaufel 28 stehende Bugrad 24 auf. Auf ihrer der Anschlagfläche 60 gegenüberliegenden Seite ist die Schaufel 28 mit einer bis zur Fahrbahn 40 reichenden angeschrägten Unterschiebkante 62 versehen. Zum Schutz der Fahrbahn 40 und des Bugrads 24 ist die Unterschiebkante 62 mit einem verschleißfesten Kunststoff beschichtet.

Die beiden miteinander verbundenen Tragholme 30,30' der Greif- und Einspannvorrichtung 29 sind in den Seitenwangen 42 der Hubgabel 26 in Gleitlagern 64 schwenkbar gelagert und durch Beaufschlagung der Hydraulikzylinder 66 gegenüber der Hubgabel 26 höhenverstellbar. Dadurch können die Anschlagrollen 34 und die an den Greifarmen 36 angeordneten Andrückrollen 68 an unterschiedliche Bugraddurchmesser angepaßt werden bzw. in unterschiedlichen Berührungspunkten an der Lauffläche 70 eines Bugrads 24 zur Anlage gebracht werden. Liegen die Berührungspunkte der Anschlagrollen 34 bzw. der Andrückrollen 68 auf einander gegenüberliegenden Bereichen der Lauffläche 70, so kann das Bugrad 24 sicher gegen Verschieben gehalten werden. Während zum Andrücken des Bugrads 24 gegen die Schaufel 28, z.B. während des Schleppbetriebs die Berührungspunkte vorteilhafterweise in der oberen Hälfte der Lauffläche 70 liegen, ist es zum Anheben des Bugrads 24 vor dem Unterschieben der Schaufel 28 zweckmäßiger, Berührungspunkte in der unteren Hälfte der Lauffläche 70 zu wählen. Das Anheben des Bugrads 24 zur Entlastung der Schaufel 28 beim Unterschieben erfolgt ebenfalls durch Beaufschlagung der Hydraulikzylinder 66.

Die beiden an der Lauffläche 70 des Bugrads 24 anliegenden Anschlagrollen 34 sind in einer wippenartigen Halterung 32 drehbar gelagert. Die Halterung 32 weist eine zu den Drehachsen der Anschlagrollen 34 parallele Schwenkachse 72 auf, so daß in der Anschlagposition stets beide Anschlagrollen 34 an der Lauffläche 70 anliegen. An beiden Stirnseiten weist die Halterung Gleitsteine 74 auf, welche in Führungen 76 der Tragholme 30,30' begrenzt verschiebbar sind. Der Verschiebeweg der Gleitsteine 74 wird durch den Hub eines Dämpfungszylinders 78 mit Stoßdämpfer- und Druckaufnahmefunktion begrenzt.

Auf ihrer dem Dämpfungszylinder 78 abgewandten Seite sind die Gleitsteine 74 mit einem Spannzylinder 80 verbunden, dessen Kolbenstange 82 an dem in der Führung 76 des Tragholms 30,30' längsverschiebbaren Greifarmträger 85 angreift. Die Greifarme 36 können so in Richtung der Anschlagrollen 34 gezogen werden, bis die Anschlagrollen 34 und die Andrückrollen 68 an der Lauffläche 70 des Bugrads 24 anliegen. Durch Anheben oder Absenken der Tragholme 30,30' ist es dabei möglich, die Berührungspunkte der Anschlagrollen 34 und der Andrückrollen 68 auf der Lauffläche 70 beliebig zu wählen.

Die Andrückrollen 68 der Greifarme 36 sind auf einer um eine Schwenkachse 86 drehbaren Halterung 88 angeordnet, so daß beim Kuppeln stets beide Andrückrollen 68 an der Lauffläche 70 des Bugrads 24 anliegen.

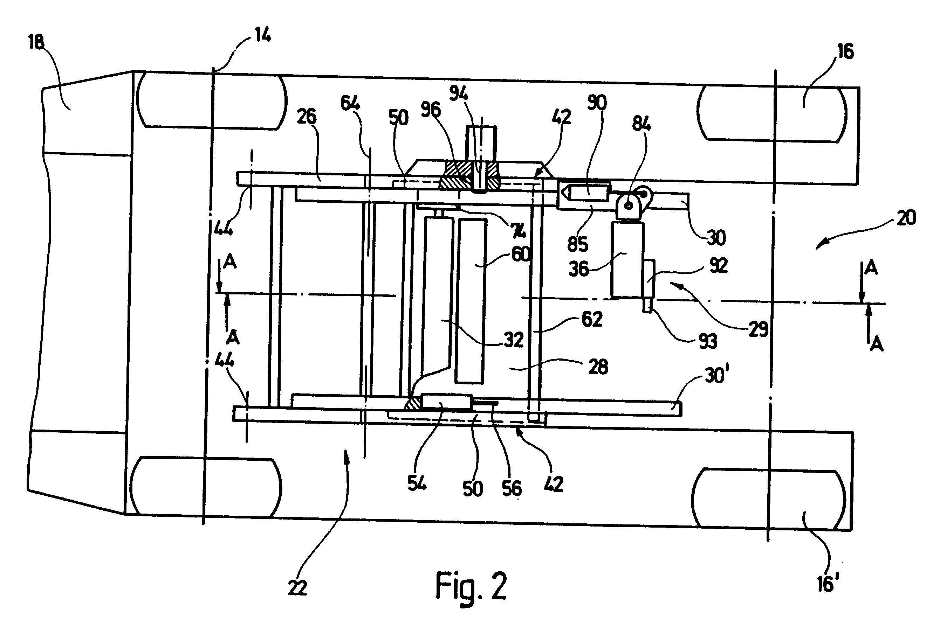

Der in Fig. 2 dargestellte Greifarm 36 ist ebenso wie der an der gegenüberliegenden Seite der Ausnehmung 20 angeordnete nicht gezeigte zweite Greifarm an einem Greifarmträger 85 um eine senkrechte Achse 84 schwenkbar angelenkt. Durch Beaufschlagung des Schwenkzylinders 90 kann der Greifarm 36 aus einer zum Tragholm 30 parallelen Offenstellung in die Schließstellung (Fig. 2) geschwenkt werden, in der der Greifarm 36 das in der Ausnehmung 20 stehende Bugrad 24 hintergreift.

Der Greifarm 36 ist mit einer hydraulisch betätigbaren Verriegelungseinheit 92 versehen. Die Verriegelung mit dem gegenüberliegenden Greifarm erfolgt, sobald beide in Schließstellung geschwenkte Greifarme miteinander fluchten. Dies ist der Fall, wenn beide Greifarmträger 85 durch Ausfahren der Kolbenstange 82 in den Führungen 76 der Tragholme 30,30' bis in eine definierte Endposition geschoben sind.

Grundsätzlich wäre es auch möglich, die Greifarme zum Öffnen nach oben aus der Ausnehmung 20 des Fahrgestells 12 herauszuschwenken. Aus Platzgründen ist jedoch die beschriebene Anordnung vorteilhafter.

Zur Sicherung der angehobenen Hubgabel 26 im Schleppbetrieb dienen im Fahrgestell 12 angeordnete Verriegelungsbolzen 94, die vom Fahrgestell 12 aus mechanisch oder hydraulisch in entsprechende Aussparungen 96 in den Seitenwangen 42 der Hubgabel 26 eingeführt werden können.

Die Dämpfungszylinder 78 sowie die Spannzylinder 80 sind mit hydraulisch oder elektrisch wirkenden, in der Zeichnung nicht dargestellten Druckaufnehmern zur Steuerung des Fahrantriebs und der Betriebsbremse versehen.

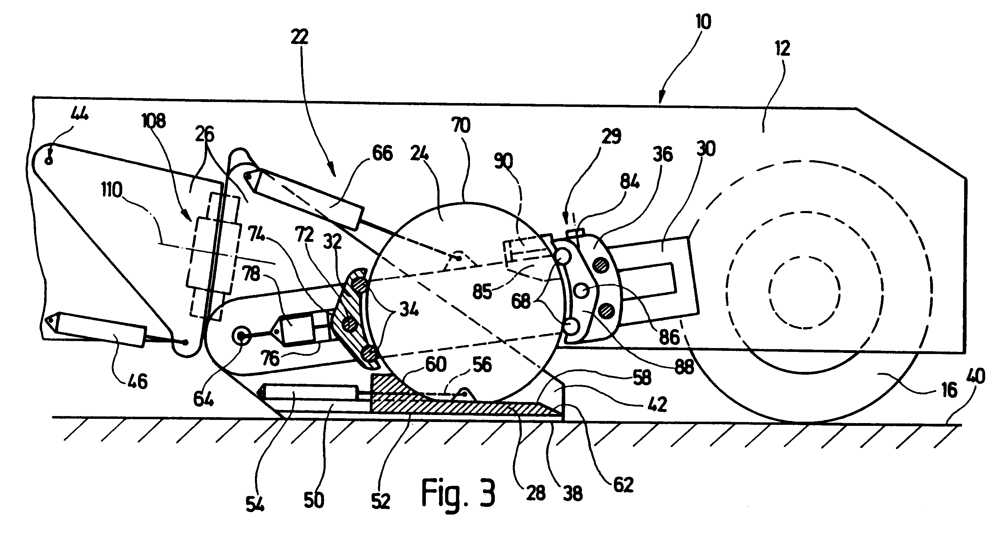

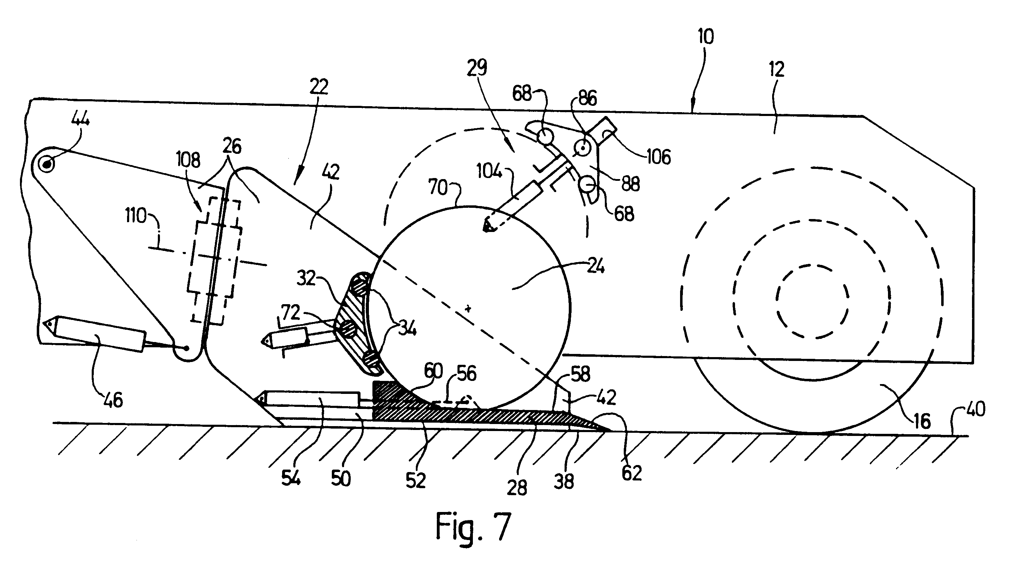

Die in den Fig. 3 und 7 dargestellte Hubgabel 26 ist zweigeteilt, wobei die beiden Teile durch ein Drehgelenk 108 verbunden sind, dessen Drehachse 110 bei angehobener Hubgabel im wesentlichen parallel zur Längsachse des Flugzeugschleppers verläuft. Der hintere, die Schaufel 28 tragende Teil der Hubgabel ist gegenüber dem vorderen, am Fahrgestell 12 schwenkbar gelagerten Teil um die Drehachse 110 drehbar. Ein nicht dargestellter Hydraulikzylinder ermöglicht dabei eine Dämpfung oder Steuerung der Drehbewegung des hinteren Teils. Kippt das Fahrgestell 12 des Flugzeugschleppers 10 z.B. als Folge eines Achs- oder Reifenschadens ab, so verhindert das Drehgelenk unzulässig hohe Biegekräfte auf das eingespannte Bugrad 24. Das Drehgelenk 108 kann zur Stoßdämpfung beidseitig durch Federelemente vorgespannt werden. Die Verriegelungsbolzen 94 zur Sicherung der angehobenen Hubgabel 26 greifen hier in Aussparungen 96 des nicht drehbar gelagerten Hubgabelteils ein.

Unzulässig hohe Biegekräfte auf das Flugzeugbugrad 24 bei Achs- oder Reifenschaden des Flugzeugschleppers 10 können auch durch ein Paar beim Kuppeln von Flugzeugschlepper 10 und Flugzeugbugrad 24 mechanisch oder hydraulisch zwischen Fahrgestell 12 und Fahrbahn 40 ausschwenkbarer, mit ihrer Lauffläche im Abstand von der Fahrbahn angeordneter Stützräder verhindert werden. Bei einem Reifen- oder Achsschaden stützt sich der abkippende Teil des Flugzeugschleppers über eines der Stützräder gegen die Fahrbahn ab, so daß die Kippbewegung auf kleine Kippwinkel begrenzt bleibt. Die Stützräder können nur in ihre Stützposition geschwenkt werden, wenn ein Bugrad zwischen den Anschlagrollen und den Andrückrollen eingespannt ist. Fährt der Flugzeugschlepper ohne angekuppeltes Flugzeug, bleiben die Stützräder in ihrer eingeschwenkten Position.

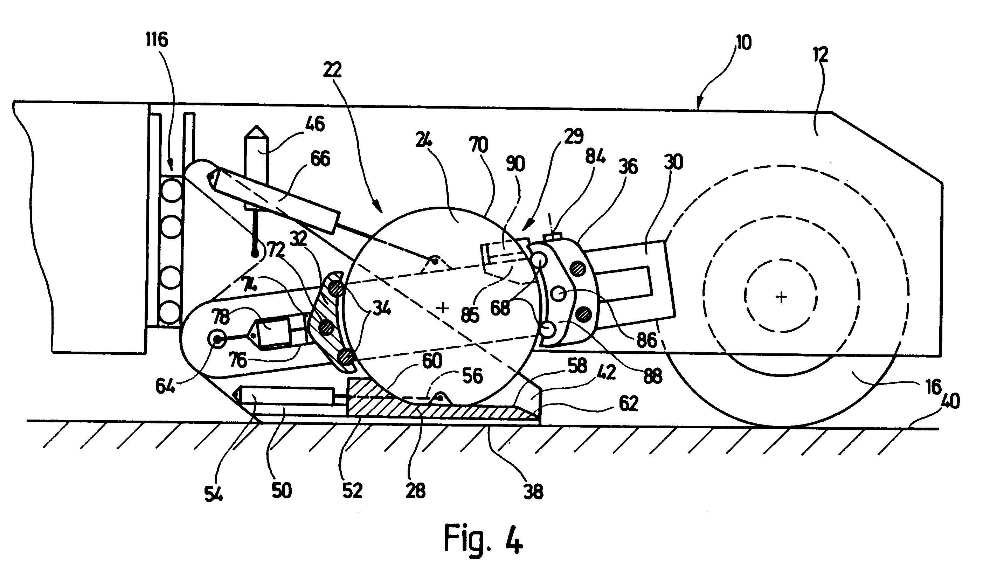

Die Hubgabel 26 des in Fig. 4 dargestellten Flugzeugschleppers ist in einer oder mehreren Rollenführungen innerhalb der Ausnehmung 20 vertikal verschiebbar gelagert und kann über einen oder mehrere Hubzylinder angehoben bzw. abgesenkt werden.

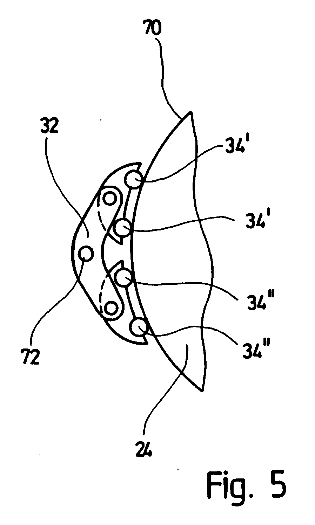

Im Unterschied zu den in den Fig. 1 bis 4 dargestellten Anschlagrollenhalterungen 32 weist die in Fig. 5 dargestellte Halterung 32 vier an der Lauffläche 70 des Bugrads 24 anliegende Anschlagrollen 34',34'' auf. Jeweils zwei Anschlagrollen 34' bzw. 34'' sind gemeinsam gegenüber der Halterung 32 verschwenkbar, wobei die Halterung 32 selbst ebenfalls um eine Schwenkachse 72 geschwenkt werden kann. Die Flächenpressungen zwischen den Anschlagrollen 34',34'' und der Lauffläche 70 des Bugrads 24 können dadurch verringert werden. Eine Anpassung an unterschiedliche Bugraddurchmesser ist möglich.

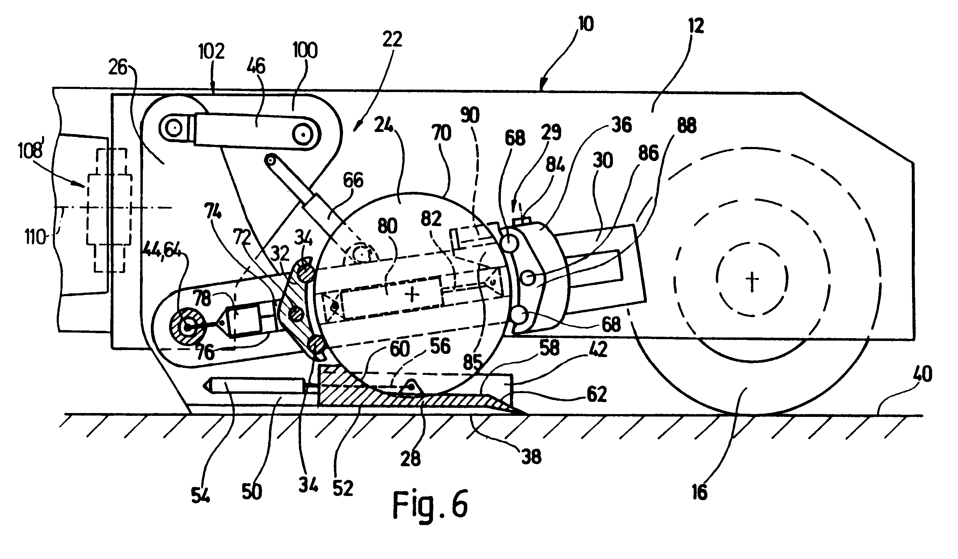

Der in Fig. 6 dargestellte Flugzeugschlepper 10 weist eine unabhängig von den Tragholmen 30,30' der Greif- bzw. Einspannvorrichtung 29 verschwenkbare Hubgabel 26 auf. Die Hubgabel 26 und die Tragholme 30,30' sind dort um eine gemeinsame Schwenkachse 44, 64 drehbar zwischen den Wangen 100 eines Lagerbocks 102 gelagert, welcher über ein Drehgelenk 108' mit dem Fahrgestell 12 des Flugzeugschleppers verbunden ist. Das Drehgelenk 108' erfüllt dabei die gleiche Aufgabe wie das in Fig. 3 dargestellte, zwischen Hubgabel und Fahrgestell angeordnete Drehgelenk 108. Das Anheben und Absenken der Hubgabel 26 bzw. der Tragholme 30,30' erfolgt durch Hydraulikzylinder 46 bzw. 66, die an den Wangen 100 des Lagerbocks 102 und an der Hubgabel 26 bzw. an den Tragholmen 30,30' angelenkt sind. Die eingeschwenkten Greifarme 36 sind nicht miteinander verriegelt und stehen nur so weit nach innen zu über die Tragholme 30, 30' über, daß die Bugradabstützung zwischen den Greifarmen 36 hindurchgeführt werden kann.

Fig. 7 zeigt einen Flugzeugschlepper mit einer vereinfachten Aufnahmevorrichtung, die vorzugsweise zum Aufnehmen leichter Flugzeuge und beim Einsatz im Push-back-Betrieb geeignet ist. Die Anschlagrollenhalterung 32 für die an der Lauffläche 70 des Bugrads 24 anliegenden Anschlagrollen 34 ist dort mit ihrer Schwenkachse 72 in den Seitenwangen 42 der Hubgabel 26 gedämpft verschiebbar gelagert. An den Innenseiten der U-förmigen Fahrgestellausnehmung 20 sind zwei durch je einen Hydraulikzylinder 104 betätigbare Andrückrollenhalterungen 88 in Führungen 106 verschiebbar angeordnet. Die um eine Schwenkachse 86 drehbaren Andrückrollenhalterungen weisen jeweils zwei Andrückrollen 68 auf, welche nach Betätigung des Hydraulikzylinders 104 gegen die Lauffläche 70 des angehobenen Bugrades 24 anliegen. Die kolbenseitigen Druckräume der beiden Hydraulikzylinder 104 sind durch eine Ausgleichsleitung miteinander verbunden, so daß bei Drehbewegungen des hinteren Teils der Hubgabel 26 um die Drehachse 110 ein Pendeln des eingespannten Bugrads 24 möglich ist.

Beim Einsatz des Flugzeugschleppers zum Schleppen eines Flugzeugs wird zuerst der Flugzeugschlepper an das stehende Flugzeug angenähert, bis sich dessen Bugrad 24 innerhalb der Ausnehmung 20 des Flugzeugschlepperfahrgestells 12 befindet.

Zum Kuppeln des in den Fig. 1 bis 4 dargestellten Flugzeugschleppers 10 wird dieser so weit an das Bugrad 24 herangefahren, bis die Anschlagrollen 34 an dessen Lauffläche 70 anliegen. Die Hubgabel 26 mit der eingefahrenen Schaufel 28 wird nun so weit abgesenkt, daß die Auflagefläche 38 auf der Fahrbahn 40 aufliegt. Die Greifarme 36, die sich in ihrer Offenstellung parallel zu den Tragholmen 30,30' befinden, werden mit den Spannzylindern 80 in die Endstellungen der Führungen 76 der Tragholme 30,30' geschoben und anschließend mit Hilfe der Schwenkzylinder 90 hinter das in der Ausnehmung 20 stehende Bugrad 24 geschwenkt. Die in dieser Stellung miteinander fluchtenden Greifarme 36 werden miteinander verriegelt und anschließend durch Beaufschlagung der Spannzylinder 80 so weit in Richtung der Anschlagrollen 34 gezogen, bis die Andrückrollen 68 an der Lauffläche 70 des Flugzeugbugrads 24 anliegen. Der Flugzeugschlepper 10 und das Flugzeugbugrad 24 sind nun auf der Fahrbahn 40 stehend unverschiebbar miteinander gekuppelt.

Eine weitere Möglichkeit zum Kuppeln des Flugzeugschleppers 10 mit dem Bugrad 24 besteht darin, den Flugzeugschlepper 10 nicht bis zum Anschlagen an das Flugzeugbugrad 24 heranzufahren, sondern den Flugzeugschlepper 10 kurz vor dem Anschlagen zu stoppen. Danach werden die Greifarme 36 das Bugrad 24 hintergreifend in die Ausnehmung 20 geschwenkt und in ihrer Endstellung miteinander verriegelt. Die miteinander verriegelten Greifarme 36 werden dann durch Beaufschlagen der Spannzylinder 80 in Richtung der Anschlagrollen 34 gezogen bis die Andrückrollen 68 am Bugrad 24 anliegen. Bei weiterer Beaufschlagung der Spannzylinder 80 wird im folgenden der ungebremste Flugzeugschlepper 10 so weit nach hinten gezogen bis die Anschlagrollen 34 an der Lauffläche 70 des Bugrads 24 anliegen und damit der Flugzeugschlepper 10 und das Bugrad 24 unverschiebbar miteinander gekuppelt sind.

Ein Kuppeln von Flugzeugschlepper und Bugrad ist nicht erforderlich, wenn während der Aufnahme des Bugrades sowohl der Flugzeugschlepper als auch das Flugzeugbugfahrwerk gegenüber der Fahrbahn unverschiebbar festgehalten wird. Zum Festhalten des Flugzeugschleppers werden zweckmäßig dessen Parkbremse aktiviert, während das Flugzeugbugfahrwerk allein aufgrund der Haftreibung zwischen den weiteren Flugzeugrädern und der Fahrbahn im Stillstand gehalten wird, wenn die beim Unterschieben der Schaufel parallel zur Fahrbahn auf das Bugrad einwirkende Kraft den Losbrechwiderstand des stehenden Flugzeugs nicht übersteigt. Dies ist insbesondere dann gewährleistet, wenn die Schaufel vor dem Unterschieben mit ihrer Unterstützungsfläche bis in Bodennähe abgesenkt werden kann. Durch Aktivieren der Bremsen an den weiteren Flugzeugrädern kann einem Wegrollen des Flugzeugs während des Unterschiebens der Schaufel zusätzlich entgegengewirkt werden.

Bei stillstehenden bzw. mit dem Bugrad gekuppeltem Flugzeugschlepper werden nun die Schaufelzylinder 54 mit Druck beaufschlagt und die abgesenkte Schaufel in der Führung 50 unter das ungebremste Bugrad 24 geschoben. Im Falle des Kuppelns wird dabei die vom Spannzylinder 80 über die Anschlagrollen 34 bzw. die Andrückrollen 68 auf das Bugrad 24 ausgeübte Einspannkraft so eingestellt, daß sich das Bugrad 24 beim Unterschieben der Schaufel 28 drehen und auf der Oberseite 58 der Schaufel abrollen kann, bis es an der Anschlagfläche 60 der Schaufel 28 anliegt. Das Bugrad 24 wird dann vollständig von der Schaufel 28 getragen.

Durch Beaufschlagen der Hubzylinder 46 wird jetzt die Hubgabel 26 angehoben, bis die Auflagefläche 38 im wesentlichen die gleiche Bodenfreiheit aufweist wie das Fahrgestell 12 des Flugzeugschleppers 10. Während des Anhebens der Hubgabel 26 können die ein Abkippen des Flugzeugschleppers 10 bei Achs- bzw. Reifenschaden verhindernden Stützräder ausgeschwenkt werden.

Zur Entlastung der Schaufelzylinder 54 und der Schaufel 28 ist es möglich, das mit dem Flugzeugschlepper gekuppelte, zwischen den Anschlagrollen 34 und den Andrückrollen 68 eingespannte bzw. von den Anschlagrollen 34 und den Andrückrollen 68 untergriffene Bugrad 24 durch Beaufschlagung der Hydraulikzylinder 66 von der Fahrbahn 40 leicht abzuheben oder zumindest den Bodendruck des Bugrads 24 zu reduzieren, bevor die Schaufel 28 unter das Bugrad 24 geschoben wird. Nach dem Unterschieben der Schaufel 28 wird das angehobene Bugrad 24 auf der Schaufel 28 abgesetzt und anschließend auf der Schaufel 28 ruhend zusammen mit dieser durch Beaufschlagung der Hubzylinder 46 angehoben. Um die Hubzylinder 46 während der Schleppfahrt zu entlasten und um die Hubgabel 26 gegen ein unbeabsichtigtes Absenken, zum Beispiel infolge eines Hydraulikschadens zu sichern, wird die Hubgabel 26 mit Hilfe der Verriegelungsbolzen 94 in ihrer angehobenen Stellung mit dem Fahrgestell 12 des Flugzeugschleppers 10 verriegelt.

Ein beim Unterschieben der Schaufel nicht hintergriffenes Bugrad kann nach dem Anheben der Schaufel gegen Verschieben auf der Schaufel gesichert werden, beispielsweise mit der in Fig. 7 dargestellten Einspannvorrichtung 29. Eine derartige Einspannvorrichtung ist insbesondere dann ausreichend, wenn der Flugzeugschlepper im reinen Push-back-Betrieb eingesetzt wird, in welchem er die Flugzeuge mit angehobenem Bugrad rückwärts vom Flugsteig zum Taxi-Way drückt. Das Bugrad wird dort durch den Standschub der Triebwerke und durch den Rollwiderstand des Flugzeugs gegen die Anschlagrollen gedrückt und bereits dadurch in seiner Transportposition auf der angehobenen Schaufel gehalten.

Während der Dauer der Schleppfahrt wird das Bugrad 24 von der Greif- bzw. Einspannvorrichtung 29 auf der Schaufel 28 gehalten und gegenüber dem Flugzeugschlepper 10 unverschiebbar gesichert. Dabei können die Anschlagrollen 34 und die Andrückrollen 68 wie in den Fig. 1 bis 4, 6 und 7 dargestellt an gegenüberliegenden Bereichen der Lauffläche 70 des Bugrads 24 anliegen. Noch besser läßt sich das Bugrad 24 auf der Schaufel 28 dadurch sichern, daß die Anschlagrollen 34 und die Andrückrollen 68 in der oberen Hälfte der Lauffläche 70 anliegen, wobei das Bugrad 24 durch Beaufschlagung des Hydraulikzylinders 66 von oben gegen die Schaufel 28 gepreßt wird. Dazu kann nach dem Unterschieben der Schaufel 28 der Spannzylinder 80 kurzzeitig drucklos gemacht werden und während dieses Zeitraums die Tragholme 30,30' der Greif- bzw. Einspannvorrichtung 29 durch Beaufschlagung der Hydraulikzylinder 66 so weit angehoben werden, daß nach erneutem Beaufschlagen des Spannzylinders 80 die Anschlagrollen 34 und die Andrückrollen 68 gegen die obere Hälfte der Bugradlauffläche 70 anliegen.

Bei den in den Fig. 1 bis 4 dargestellten Flugzeugschleppern wird nach Beendigung der Flugzeugbewegung die Hubgabel 26 auf der Fahrbahn abgesetzt, die Einspannung des Bugrades 24 durch Entriegeln und Zurückschwenken der Greifarme 34 gelöst, die Schaufel nach vorne zu unter dem Bugrad weggezogen und nach Anheben der Hubgabel der Flugzeugschlepper vom Bugrad weggefahren. Im Unterschied dazu kann bei dem in Fig. 6 dargestellten Flugzeugschlepper nach Beendigung der Flugzeugbewegung der Spannzylinder 80 entlastet und anschließend die Hubgabel 26 zusammen mit dem auf der Schaufel 28 stehenden Bugrad 24 bis in Fahrbahnnähe abgesenkt werden, während die Greif- bzw. Einspannvorrichtung 29 in ihrer Transportstellung angehoben bleibt Durch Wegfahren des Flugzeugschleppers vom stehenden Flugzeug kann die in Bodennähe abgesenkte Schaufel 28 unter dem auf der Schaufel abrollenden Bugrad weggezogen werden. Dabei können stabilisierend die Bremsen am Hauptfahrwerk des Flugzeugs aktiviert werden.

Wird der in Fig. 7 dargestellte Flugzeugschlepper in der zuvor beschriebenene Weise eingesetzt, so kann das Bugrad in ähnlicher Weise abgesetzt werden. Im Pushback-Betrieb kann die teilweise abgesenkte Schaufel durch Vorwärtsfahren des Flugzeugschleppers unter dem Bugrad des gebremsten Flugzeugs hervorgezogen werden.

## Patentansprüche

1. Verfahren zum Aufnehmen eines Flugzeugbugfahrwerks mit mindestens einem Bugrad (24) durch einen Flugzeugschlepper (10), bei dem der Flugzeugschlepper (10) und das Bugrad (24) auf einer Fahrbahn (40) bis zum Anschlagen einander angenähert werden, bei dem eine das Bugrad (24) aufnehmende Schaufel (28) des Flugzeugschleppers auf die Fahrbahn (40) oder bis in deren Nähe abgesenkt und nach Aufnahme des Bugrads (24) zusammen mit dem Bugrad angehoben wird, **dadurch gekennzeichnet**, daß nach dem Annähern der Flugzeugschlepper (10) und das Bugrad (24) auf der Fahrbahn (40) stehend unverschiebbar miteinander gekuppelt werden und daß anschließend die abgesenkte Schaufel (28) relativ zum Flugzeugschlepper (10) verschoben und dabei vollständig unter das Bugrad (24) geschoben wird.

2. Verfahren nach Anspruch 1, **dadurch gekennzeichnet**, daß die Schaufel (28) quer zur Drehachse des Bugrads (24) untergeschoben wird, wobei das ungebremste Bugrad (24) in eine Drehbewegung versetzt wird.

3. Verfahren nach Anspruch 1 oder 2, **dadurch gekennzeichnet**, daß vor dem Kuppeln das Bugrad (24) vom Flugzeugschlepper (10) aus hintergriffen und der Flugzeugschlepper (10) bis zum Anschlagen an das Bugrad (24) herangezogen wird.

4. Verfahren nach einem der Ansprüche 1 bis 3, **dadurch** **gekennzeichnet**, daß zum Kuppeln das an einem Anschlag des Flugzeugschleppers (10) anliegende Bugrad (24) vom Flugzeugschlepper (10) aus hintergriffen und gegen den Anschlag gedrückt wird.

5. Verfahren nach einem der Ansprüche 1 bis 4, **dadurch gekennzeichnet**, daß das mit dem Flugzeugschlepper (10) gekuppelte Bugrad (24) vor dem Unterschieben der Schaufel (28) vom Flugzeugschlepper (10) aus angehoben, vorzugsweise von der Fahrbahn (40) abgehoben wird.

6. Verfahren nach Anspruch 5, **dadurch gekennzeichnet**, daß nach dem Unterschieben der Schaufel (28) das angehobenen Bugrad (24) auf der Schaufel (28) abgesetzt wird.

7. Verfahren nach einem der Ansprüche 1 bis 6, **dadurch gekennzeichnet**, daß das Bugrad (24) nach dem Unterschieben der Schaufel (28) unverschiebbar gegenüber der Schaufel (28) gesichert wird, vorzugsweise durch Andrücken des Bugrads (24) auf die Schaufel (28).

8. Verfahren nach einem der Ansprüche 1 bis 7, **dadurch gekennzeichnet**, daß die das Bugrad (24) tragende Schaufel (28) in einer angehobenen Position gegenüber dem Flugzeugschlepper (10) verriegelt wird.

9. Verfahren nach einem der Ansprüche 1 bis 8, **dadurch gekennzeichnet**, daß beim Abkuppeln des Flugzeugschleppers (10) vom Bugrad (24) die Schaufel (28) abgesenkt und dann unter dem hierbei in eine Drehbewegung versetzten Bugrad (24) hervorgezogen wird.

10. Verfahren zum Aufnehmen eines Flugzeugbugfahrwerks mit mindestens einem Bugrad (24) durch einen Flugzeugschlepper (10), bei dem der Flugzeugschlepper (10) und das Bugrad (24) auf einer Fahrbahn (40) bis zum Anschlagen einander angenähert werden, bei dem eine das Bugrad aufnehmende Schaufel (28) des Flugzeugschleppers (10) auf die Fahrbahn (40) oder bis in deren Nähe abgesenkt und nach Aufnahme des Bugrads zusammen mit dem Bugrad angehoben wird, **dadurch gekennzeichnet**, daß der Flugzeugschlepper (10) nach dem Annähern unverschiebbar auf der Fahrbahn (40) festgehalten wird und daß anschließend die abgesenkte Schaufel (28) relativ zum Flugzeugschlepper (10) verschoben und dabei vollständig unter das Bugrad (24) des gegenüber der Fahrbahn (40) unverschiebbar gehaltenen Flugzeugbugfahrwerks geschoben wird.

11. Verfahren nach Anspruch 10, **dadurch gekennzeichnet**, daß das Flugzeugbugfahrwerk durch die Haftreibung zwischen weiteren Flugzeugrädern und der Fahrbahn (40) unverschiebbar gehalten wird.

12. Verfahren nach Anspruch 11, **dadurch gekennzeichnet**, daß mindestens ein Teil der weiteren Flugzeugräder und/oder der Flugzeugschlepper (10) vor dem Unterschieben der Schaufel (28) vorzugsweise durch Betätigen von Bremsen auf der Fahrbahn (40) festgehalten wird.

13. Verfahren nach einem der Ansprüche 10 bis 12, **dadurch gekennzeichnet**, daß das Bugrad (24) nach dem Anheben der Schaufel (28) gegen ein Verschieben auf der Schaufel gesichert wird, vorzugsweise zwischen der Schaufel und mindestens einem gegen das Bugrad (24) anliegenden Anschlag eingespannt wird.

14. Flugzeugschlepper (10) mit einem, eine gabelförmige Ausnehmung (20) aufweisenden Fahrgestell (12), sowie mit einer im Bereich der Ausnehmung (20) angeordneten heb- und senkbaren Schaufel (28) zur Aufnahme eines auf einer Fahrbahn (40) bis in eine Anschlagposition an den Flugzeugschlepper (10) angenäherten, mindestens ein Bugrad (24) aufweisenden Flugzeugbugfahrwerks, **dadurch gekennzeichnet**, daß der Flugzeugschlepper (10) in der Anschlagposition mit dem auf der Fahrbahn (40) stehenden Bugrad (24) unverschiebbar kuppelbar ist und daß die abgesenkte Schaufel (28) relativ zum Fahrgestell (12) des Flugzeugschleppers (10) vollständig unter das Bugrad (24) verschiebbar ist.

15. Flugzeugschlepper nach Anspruch 14, **dadurch gekennzeichnet**, daß die Schaufel (28) quer zur Drehachse des Bugrads (24) unter das ungebremste Bugrad (24) verschiebbar ist.

16. Flugzeugschlepper nach Anspruch 14 oder 15, **gekennzeichnet durch** eine das mit dem Flugzeugschlepper (10) gekuppelte Bugrad (24) drehbar haltende Greif- bzw. Einspannvorrichtung (29).

17. Flugzeugschlepper nach einem der Ansprüche 14 bis 16, **dadurch gekennzeichnet**, daß das Bugrad (24) nach dem Kuppeln vom Flugzeugschlepper (10) aus anhebbar, vorzugsweise von der Fahrbahn (40) abhebbar ist.

18. Flugzeugschlepper nach einem der Ansprüche 14 bis 17, **gekennzeichnet durch** eine das Bugrad (24) auf der vollständig untergeschobenen Schaufel (28) sichernde, vorzugsweise gegen die Schaufel (28) andrückende Greif- und Einspannvorrichtung (29).

19. Flugzeugschlepper nach einem der Ansprüche 14 bis 18, **dadurch gekennzeichnet**, daß die Schaufel (28) in einer gegenüber dem Fahrgestell (12) heb- und senkbaren Hubgabel (26) längsverschiebbar gelagert ist.

20. Flugzeugschlepper nach einem der Ansprüche 14 bis 19, **dadurch gekennzeichnet**, daß die Schaufel (28) in unterschiedlichen Hubhöhen gegenüber dem Fahrgestell (12) verriegelbar ist.

21. Flugzeugschlepper nach einem der Ansprüche 14 bis 20, **dadurch gekennzeichnet**, daß die abgesenkte Schaufel (28) eine geringe Bodenfreiheit aufweist.

22. Flugzeugschlepper nach einem der Ansprüche 14 bis 21, **dadurch gekennzeichnet**, daß die Schaufel (28) eine dem Bugrad (24) zugewandte, schräg zur Fahrbahn (40) weisende vorzugsweise mit verschleißfestem Kunststoff beschichtete Unterschiebkante (62) aufweist.

23. Flugzeugschlepper nach einem der Ansprüche 14 bis 22, **dadurch gekennzeichnet**, daß die Schaufel (28) eine über die Schaufeloberseite (58) überstehende keilförmige oder konkav gerundete Anschlagfläche (60) für das auf der Schaufel (28) stehende Bugrad (24) aufweist.

24. Flugzeugschlepper nach einem der Ansprüche 14 bis 23, **gekennzeichnet durch** mindestens eine, im Bereich der Ausnehmung (20) angeordnete, in der Anschlagposition gegen einen dem Flugzeugschlepper (10) zugewandten Teil der Lauffläche (70) des Bugrads (24) anliegende Anschlagrolle (34) mit einer quer zur Längsachse des Flugzeugschleppers (10) ausgerichteten Drehachse.

25. Flugzeugschlepper nach Anspruch 24, **dadurch gekennzeichnet**, daß die Anschlagrollen (34) paarweise an einer um eine zur Drehachse der Anschlagrollen parallele Achse (72) schwenkbaren Halterung (32) gelagert sind.

26. Flugzeugschlepper nach Anspruch 25, **dadurch gekennzeichnet**, daß die Anschlagrolle (34) bzw. die Halterung (32) der Anschlagrollen (34) in Anschlagrichtung begrenzt verschiebbar ist.

27. Flugzeugschlepper nach Anspruch 25 oder 26, **dadurch gekennzeichnet**, daß die Anschlagrolle (34) bzw. die Halterung (32) der Anschlagrollen (34) gegen einen Stoßdämpfer (78) verschiebbar ist, der vorzugsweise mit mindestens einem Druckaufnehmer zur Messung der auf die Anschlagrolle (34) bzw. die Halterung (32) wirkenden Kräfte versehen ist.

28. Flugzeugschlepper nach einem der Ansprüche 25 bis 27, **dadurch gekennzeichnet**, daß die Anschlagrolle (34) bzw. die Halterung (32) der Anschlagrollen (34) an der Greif- bzw. Einspannvorrichtung (29) angeordnet sind.

29. Flugzeugschlepper nach einem der Ansprüche 14 bis 28, **gekennzeichnet durch** mindestens einen, hinter das innerhalb der Ausnehmung (20) stehende Bugrad (24) schwenkbaren Greifarm (36), der mindestens eine drehbare, gegen die Lauffläche (70) des Bugrads (24) anlegbare Andrückrolle (68) aufweist.

30. Flugzeugschlepper nach Anspruch 29, **dadurch gekennzeichnet**, daß auf beiden Seiten der Ausnehmung (20) ein Greifarm (36) um je eine senkrechte Achse (84) schwenkbar an einem Greifarmträger (85) angelenkt ist.

31. Flugzeugschlepper nach Anspruch 30, **dadurch gekennzeichnet**, daß die beiden hinter das Flugzeugbugrad (24) geschwenkten Greifarme (36) miteinander verriegelbar sind.

32. Flugzeugschlepper nach Anspruch 30 oder 31, **dadurch gekennzeichnet**, daß die Greifarme (36) auf die Anschlagrolle (34) zu verschiebbar sind.

33. Flugzeugschlepper nach einem der Ansprüche 30 bis 32, **dadurch gekennzeichnet**, daß die Greifarmträger (85) an zwei zu den Seitenflächen des in der Ausnehmung (20) stehenden Flugzeugbugrads (24) parallelen, heb- und senkbaren Tragholmen (30,30') der Greif- bzw. Einspannvorrichtung (29) angeordnet sind.

34. Flugzeugschlepper nach Anspruch 33, **dadurch gekennzeichnet**, daß die Greifarmträger (85) in Führungen (76) der Tragholme (30,30') längsverschiebbar gelagert sind.

35. Flugzeugschlepper nach Anspruch 33 oder 34, **dadurch gekennzeichnet**, daß die Anschlagrolle (34) bzw. die Halterung (32) der Anschlagrollen (34) in den Führungen (76) der Tragholme (30,30') begrenzt längsverschiebbar gelagert ist.

36. Flugzeugschlepper nach einem der Ansprüche 33 bis 35, **dadurch gekennzeichnet**, daß die Tragholme (30,30') in der Hubgabel (26) höhenverstellbar, vorzugsweise schwenkbar gelagert sind.

37. Flugzeugschlepper nach einem der Ansprüche 33 bis 36, **dadurch gekennzeichnet**, daß die Greifarmträger (85) durch mindestens je einen teleskopierbaren, hydraulisch wirkenden Spannzylinder (80) mit der Anschlagrolle (34) bzw. mit der Halterung (32) der Anschlagrollen (34) verbindbar sind.

38. Flugzeugschlepper nach Anspruch 37, **dadurch gekennzeichnet**, daß der Spannzylinder (80) mindestens einen Druckaufnehmer aufweist.

39. Flugzeugschlepper nach einem der Ansprüche 19 bis 38, **dadurch gekennzeichnet**, daß die Hubgabel (26) zweiteilig ausgebildet ist und daß der hintere, die Schaufel tragende Teil gegenüber dem vorderen, am Fahrgestell angelenkten Teil bei angehobener Hubgabel (26) um eine im wesentlichen zur Flugzeugschlepperlängsachse parallele Drehachse (110) vorzugsweise gedämpft oder gesteuert verdrehbar ist.

40. Flugzeugschlepper nach einem der Ansprüche 14 bis 39, **gekennzeichnet durch** mindestens ein Paar beim Kuppeln von Flugzeugschlepper (10) und Bugrad (24) mechanisch oder hydraulisch zwischen Fahrgestell (12) und Fahrbahn (40) ausschwenkbarer, mit ihrer Lauffläche im Abstand von der Fahrbahn angeordneter, bei Reifen- oder Achsschaden ein Kippen des Flugzeugschleppers (10) verhindernder Stützräder.

41. Flugzeugschlepper (10) mit einem, eine gabelförmige Ausnehmung (20) aufweisenden Fahrgestell (12), sowie mit einer im Bereich der Ausnehmung (20) angeordneten heb- und senkbaren Schaufel (28) zur Aufnahme eines auf einer Fahrbahn (40) bis in eine Anschlagposition an den Flugzeugschlepper (10) angenäherten, mindestens ein Bugrad (24) aufweisenden Flugzeugbugfahrwerks, wobei die Schaufel (28) mit ihrer Oberseite (58) eine Unterstützungsfläche für den Transport des angehobenen Bugrads (24) bildet und wobei die Schaufel (28) mit der Unterstützungsfläche bis in Bodennähe absenkbar ist, dadurch gekennzeichnet, daß die Schaufel (28) bei feststehendem Flugzeugschlepper (10) relativ zu dessen Fahrgestell (12) vollständig unter das Bugrad (24) verschiebbar ist.

42. Flugzeugschlepper nach Anspruch 41, **gekennzeichnet durch** mindestens einen gegen das angehobene Bugrad (24) anliegenden, das Bugrad (24) unverschiebbar auf der Schaufel (28) haltenden Anschlag (32,36').

## Claims

1. A process for attaching an aircraft nose landing gear having at least one nose wheel (24) to an aircraft tractor (10) whereby the aircraft tractor (10) and the nose wheel (24) are moved towards each other on an apron (40) until they make contact, a shovel (28) of the aircraft tractor which receives the nose wheel (24) is lowered until it touches or almost touches the apron (40) and, after receiving the nose wheel (24), it is raised together with the nose wheel, characterized in that after approaching each other, the aircraft tractor (10) and the nose wheel (24) are coupled to each other on the apron (40), so that they are stationary and immovable, and that subsequently the lowered shovel (28) is shifted relative to the aircraft tractor (10) and is thereby slid completely under the nose wheel (24).

2. The process according to claim 1, characterized in that the shovel (28) is slid under the nose wheel (24) at right angles to its axis of rotation, whereby the unbraked nose wheel (24) is set into a rotary motion.

3. The process according to claim 1 or 2, characterized in that before the coupling operation, the nose wheel (24) is gripped from behind by the aircraft tractor (10) and the aircraft tractor (10) is pulled nearer to the nose wheel (24) until contact is made.

4. The process according to one of the claims 1 through 3, characterized in that for the coupling operation, the nose wheel (24) which abuts against a limit stop of the aircraft tractor (10) is gripped from behind by the aircraft tractor (10) and pressed against the limit stop.

5. The process according to one of the claims 1 through 4, characterized in that the nose wheel (24), which is coupled to the aircraft tractor (10), can be lifted, preferably lifted up from the apron (40), by the aircraft tractor (10) before the shovel (28) is slid underneath.

6. The process according to claim 5, characterized in that after the shovel (28) is slid underneath, the raised nose wheel (24) is set down on the shovel (28).

7. The process according to one of the claims 1 through 6, characterized in that after the shovel (28) is slid under the nose wheel (24), the nose wheel (24) is immovably secured with respect to the shovel (28), preferably by pressing the nose wheel (24) on to the shovel (28).

8. The process according to one of the claims 1 through 7, characterized in that the shovel (28) carrying the nose wheel (24) is locked in a raised position with respect to the aircraft tractor (10).

9. The process according to one of the claims 1 through 8, characterized in that when the aircraft tractor (10) is uncoupled from the nose wheel (24), the shovel (28) is lowered and then moved out from underneath the nose wheel (24) which meanwhile is set into a rotary motion.

10. A process for attaching an aircraft nose landing gear having at least one nose wheel (24) to an aircraft tractor (10), whereby the aircraft tractor (10) and the nose wheel (24) are moved towards each other on an apron (40) until they make contact, a shovel (28) of the aircraft tractor (10) which receives the nose wheel is lowered until it touches or almost touches the apron (40) and, after receiving the nose wheel, it is raised together with the nose wheel, characterized in that after the approaching step, the aircraft tractor (10) is immovably retained on the apron (10), and that subsequently the lowered shovel (28) is shifted relative to the aircraft tractor (10) and is thereby slid completely under the nose wheel (24) of the aircraft nose landing gear which is immovably held with respect to the apron (40).

11. The process according to claim 10, characterized in that the aircraft nose landing gear is held so that it is immovable by the static friction between the other airplane wheels and the apron (40).

12. The process according to claim 11, characterized in that at least one part of the other airplane wheels and/or the aircraft tractor (10) is retained on the apron (40) before the shovel (28) is slid underneath, preferably by actuating the brakes.

13. The process according to one of the claims 10 through 12, characterized in that after the shovel is raised, the nose wheel (24) is secured to prevent it from moving on the shovel (28), preferably by clamping it between the shovel and at least one limit stop that abuts on the nose wheel (24).

14. An aircraft tractor (10) with a chassis (12) showing a fork-shaped recess (20), as well as with a raisable and lowerable shovel (28) arranged in the area of the recess (20) for receiving an aircraft nose landing gear, which has at least one nose wheel (24) and has been moved on an apron (40) toward the aircraft tractor until it is in a limit-stop position, characterized in that the aircraft tractor (10) is able to be immovably coupled in the limit-stop position to the nose wheel (24) standing on the apron (40), and that the lowered shovel (28) is able to be slid relative to the chassis (12) of the aircraft tractor (10) completely under the nose wheel (24).

15. The aircraft tractor according to claim 14, characterized in that the shovel (28) is able to be slid under the unbraked nose wheel (24) at right angles to the axis of rotation of the nose wheel (24).

16. The aircraft tractor according to claim 14 or 15, characterized by a gripping or clamping device (29), which rotatably supports the nose wheel (24) which is coupled to the aircraft tractor (10).

17. The aircraft tractor according to one of the claims 14 through 16, characterized in that after the coupling operation, the nose wheel (24) can be lifted, preferably lifted up from the apron (40), by the aircraft tractor (10).

18. The aircraft tractor according to one of the claims 14 through 17, characterized by a gripping and clamping device (29), which secures the nose wheel (24) to the shovel (28) which has been pushed all the way under it, preferably by forcing said nose wheel against the shovel (28).

19. The aircraft tractor according to one of the claims 14 through 18, characterized in that the shovel (28) is supported so that it can be displaced longitudinally in a lifting fork (26), which can be raised and lowered with respect to the chassis (12).

20. The aircraft tractor according to one of the claims 14 through 19, characterized in that the shovel (28) is able to be locked at different lifting heights with respect to the chassis (12).

21. The aircraft tractor according to one of the claims 14 through 20, characterized in that the lowered shovel (28) has a low ground clearance.

22. The aircraft tractor according to one of the claims 14 through 21, characterized in that the shovel (28) has an edge (62) configured to slide underneath, which points diagonally to the apron (40) and is turned toward the nose wheel (24) and is preferably coated with a wear-resistant plastic.

23. The aircraft tractor according to one of the claims 14 through 22, characterized in that the shovel (28) features a wedge-shaped or concavely rounded stop face (60), which projects over the top side (58) of the shovel and is provided for the nose wheel (24) resting on the shovel (28).

24. The aircraft tractor according to one of the claims 14 through 23, characterized by at least one tappet roller (34), which is arranged in the area of the recess (20) and which abuts in the limit-stop position against a part of the rolling surface (70) of the nose wheel (24) that is turned toward the aircraft tractor (10) with an axis of rotation which is aligned at right angles to the longitudinal axis of the aircraft tractor (10).

25. The aircraft tractor according to claim 24, characterized in that the tappet rollers (34) are supported in pairs on a mounting support (32) and are able to swivel around an axis (72) that is parallel to the axis of rotation of said tappet rollers.

26. The aircraft tractor according to claim 25, characterized in that the tappet roller (34) or the mounting support (32) for the tappet rollers (34) is able to move to a limited extent in the direction of impact.

27. The aircraft tractor according to claim 25 or 26, characterized in that the tappet roller (34) or the mounting support (32) for the tappet rollers (34) is able to move toward a shock absorber (78), which is preferably provided with at least one pressure sensor for measuring the forces acting on the tappet roller (34) or on the mounting support (32).

28. The aircraft tractor according to one of the claims 25 through 27, characterized in that the tappet roller (34) or the mounting support (32) of the tappet rollers (34) are arranged on the gripping or clamping device (29).

29. The aircraft tractor according to one of the claims 14 through 28, characterized by at least one gripping arm (36), which can swivel behind the nose wheel (24) situated inside the recess (20), whereby said gripping arm has at least one rotatable pressing roller (68) which can be positioned against the rolling surface (70) of the nose wheel (24).

30. The aircraft tractor according to claim 29, characterized in that on both sides of the recess (20), a gripping arm (36) is hinged on a gripping-arm support (85) so that it can swivel around one perpendicular axis (84) in each case.

31. The aircraft tractor according to claim 30, characterized in that the two gripping arms (36) That are swung behind the aircraft nose wheel (24) are capable of being locked together.

32. The aircraft tractor according to claim 30 or 31, characterized in that the gripping arms (36) are movable toward the tappet roller (34).

33. The aircraft tractor according to one of the claims 30 through 32, characterized in that the gripping-arm supports (85) are arranged on two raisable and lowerable supporting bars (30,30') of the gripping or clamping device (29) which are parallel to the side surfaces of the aircraft nose wheel (24) occupying the recess (20).

34. The aircraft tractor according to claim 33, characterized in that the gripping-arm supports (85) are supported in guideways (76) of the supporting bars (30,30') so that they can be displaced longitudinally.

35. The aircraft tractor according to claim 33 or 34, characterized in that the tappet roller (34) or the mounting support (32) for the tappet rollers (34) is supported so that it can move longitudinally to a limited extent in the guideways (76) of the supporting bars (30,30').

36. The aircraft tractor according to one of the claims 33 through 35, characterized in that the supporting bars (30,30') are supported, preferably pivoted in the lifting fork (26) with vertical adjustment.

37. The aircraft tractor according to one of the claims 33 through 36, characterized in that the gripping-arm supports (85) are able to be connected by means of at least one hydraulically acting telescopic cocking cylinder (80) each to the tappet roller (34) or rather to the mounting support (32) of the tappet rollers (34).

38. The aircraft tractor according to claim 37, characterized in that the cocking cylinder (80) has at least one pressure sensor.

39. The aircraft tractor according to one of the claims 19 through 38, characterized in that the lifting fork (26) is designed in two parts and that when the lifting fork (26) is raised, the rear part which supports the shovel can rotate around an axis of rotation (110), which runs essentially parallel to the longitudinal axis of the aircraft tractor, preferably while being damped or controlled, opposite the front part which is pivoted on the chassis.

40. The aircraft tractor according to one of the claims 14 through 39, characterized by at least one pair of jackwheels which can be swung out mechanically or hydraulically between the chassis (12) and the apron (40) when the aircraft tractor (10) is coupled to the aircraft nose wheel (24) and which are arranged with clearance between their rolling surface and the apron and which prevent the aircraft tractor (10) from tipping in case of tire or axle damage.

41. The aircraft tractor (10) with a chassis (12) showing a fork-shaped recess (20), as well as with a raisable and lowerable shovel (28) arranged in the area of the recess (20) for receiving an aircraft nose landing gear, which has at least one nose wheel (24) and has been moved on an apron (40) toward the aircraft tractor (10) until it is in a limit-stop position, whereby with its top side (58), the shovel (28) forms a supporting surface for carrying the raised nose wheel (24), and whereby the shovel (28) with the supporting surface can be lowered until it is close to the ground, characterized in that when the aircraft tractor (10) is stationary, the shovel (28) is able to be slid relative to its chassis (12) completely under the nose wheel (24).

42. The aircraft tractor according to claim 41, characterized by at least one limit stop (32,36') that abuts against the raised nose wheel (24) and that immovably retains the nose wheel (24) on the shovel (28).

## Revendications

1. Procédé pour fixer à un remorqueur d'avions (10) un train d'atterrissage avant d'un avion avec au moins une roue avant (24), d'après lequel le remorqueur d'avions (10) et la roue avant (24) sont rapprochés l'un de l'autre sur une voie de circulation (40) jusque dans la position de butée et d'après lequel une pelle (28) du remorqueur d'avions recevant la roue avant (24) est descendue sur la voie de circulation (40) ou jusqu'à proximité de celle-ci et relevée avec la roue avant (24), après la prise en charge de cette dernière, **caractérisé en ce** que, après le rapprochement, le remorqueur d'avions (10) et la roue avant (24) placée sur la voie de circulation (40) sont solidarisés l'un avec l'autre et qu'ensuite la pelle (28) abaissée est déplacée par rapport au remorqueur d'avions (10) et glissée entièrement sous la roue avant (24).

2. Procédé selon la revendication 1, caractérisé en ce que la pelle (28) est passée sous la roue avant (24) transversalement à l'axe de rotation de celle-ci, la roue avant (24) non freinée étant alors animée d'un mouvement de rotation.

3. Procédé selon l'une des revendications 1 ou 2, caractérisé en ce qu'avant l'accouplement de la roue avant (24), celle-ci est saisie par derrière à partir du remorqueur d'avions (10) et que ledit remorqueur d'avions (10) est tiré vers la roue avant (24) jusque dans la position de butée.

4. Procédé selon l'une des revendications 1 à 3, caractérisé en ce que pour l'accouplement, la roue avant (24) appliquée contre une butée du remorqueur d'avions (10) est saisie par derrière à partir du remorqueur d'avions (10) et poussée contre ladite butée.

5. Procédé selon l'une des revendications 1 à 4, caractérisé en ce que la roue avant (24) couplée avec le remorqueur d'avions (10) est soulevée, de préférence dégagée de la voie de circulation (40), par le remorqueur d'avions (10) avant la mise en place de la pelle (28).

6. Procédé selon la revendication 5, caractérisé en ce que, après la mise en place de la pelle (28), la roue avant (24) est posée sur ladite pelle (28).

7. Procédé selon l'une des revendications 1 à 6, caractérisé en ce que, après la mise en place de la pelle (28), la roue avant (24) est immobilisée par rapport à la pelle (28), de préférence en pressant ladite roue avant (24) contre la pelle (28).

8. Procédé selon l'une des revendications 1 à 7, caractérisé en ce que la pelle (28) portant la roue avant (24) est verrouillée par rapport au remorqueur d'avions (10) dans une position relevée.

9. Procédé selon l'une des revendications 1 à 8, caractérisé en ce que, lors du découplage du remorqueur d'avions (10) de la roue avant (24), la pelle (28) est descendue, puis retirée du dessous de la roue avant (24) alors mise en rotation.

10. Procédé pour fixer à un remorqueur d'avions (10) un train d'atterrissage avant d'un avion avec au moins une roue avant (24), d'après lequel le remorqueur d'avions (10) et la roue avant (24) sont rapprochés l'un de l'autre sur une voie de circulation (40) jusque dans la position de butée et d'après lequel une pelle (28) du remorqueur d'avions (10) recevant la roue avant est descendue sur la voie de circulation (40) ou jusqu'à proximité de celle-ci et relevée avec la roue avant, après la prise en charge de cette dernière, caractérisé en ce que, après le rapprochement, le remorqueur d'avions (10) est immobilisé sur la voie de circulation (40), et qu'ensuite la pelle (28) descendue est déplacée par rapport au remorqueur d'avions (10) en passant entièrement sous la roue avant (24) du train d'atterrissage avant de l'avion immobilisé par rapport à ladite voie de circulation (40).

11. Procédé selon la revendication 10, caractérisé en ce que le train d'atterrissage avant de l'avion est immobilisé par l'adhérence entre les autres roues de l'avion et la voie de circulation (40).

12. Procédé selon la revendication 11, caractérisé en ce qu'au moins une partie des roues d'avion et/ou le remorqueur d'avions (10) sont immobilisés sur la voie de circulation (40) avant la mise en place de la pelle (28) sous la roue avant, de préférence en actionnant des freins.

13. Procédé selon l'une des revendications 10 à 12, caractérisé en ce que, après le relevage de la pelle (28), la roue avant (24) est immobilisée sur ladite pelle, de préférence enserrée entre la pelle et au moins une butée appliquée contre la roue avant (24).

14. Remorqueur d'avions (10) avec un châssis (12) qui présente un évidement (20) en forme de fourche ainsi qu'avec une pelle (28) montée dans la région de l'évidement (20), qui peut être relevée et abaissée pour la prise en charge d'un train d'atterrissage avant d'un avion avec au moins une roue avant (24) qui, sur la voie de circulation (40), est rapprochée du remorqueur d'avions (10) jusque dans une position de butée, **caractérisé en ce** que le remorqueur d'avions (10) peut être solidarisé dans la position de butée avec la roue avant (24) placée sur la voie de circulation (40), et que la pelle (28) abaissée peut être déplacée par rapport au châssis (12) du remorqueur d'avions (10) et amenée entièrement sous ladite roue avant (24).

15. Remorqueur d'avions selon la revendication 14, caractérisé en ce que la pelle (28) peut être déplacée sous la roue avant (24) non freinée transversalement par rapport à l'axe de rotation de ladite roue avant (24).

16. Remorqueur d'avions selon l'une des revendications 14 ou 15, caractérisé en ce qu'il comprend un système de préhension et respectivement de fixation (29) qui maintient la roue avant (24) couplée avec le remorqueur d'avions (10) de manière à pouvoir tourner.

17. Remorqueur d'avions selon l'une des revendications 14 à 16, caractérisé en ce que, après l'accouplement, la roue avant (24) peut être soulevée, de préférence dégagée de la voie de circulation (40), à partir du remorqueur d'avions (10).

18. Remorqueur selon l'une des revendications 14 à 17, caractérisé en ce qu'il comprend un système de préhension et de fixation (29) qui bloque la roue avant (24) sur la pelle (28) entièrement passée sous ladite roue avant et la presse de préférence contre ladite pelle (28).

19. Remorqueur d'avions selon l'une des revendications 14 à 18, caractérisé en ce que la pelle (28) est montée de manière mobile dans le sens longitudinal dans une fourche de levage (26) qui peut être relevée et abaissée par rapport au châssis (12).

20. Remorqueur d'avions selon l'une des revendications 14 à 19, caractérisé en ce que la pelle (28) peut être verrouillée à différentes hauteurs de levage par rapport au châssis (12).

21. Remorqueur d'avions selon l'une des revendications 14 à 20, caractérisé en ce que la pelle (28) abaissée présente une faible garde au sol.

22. Remorqueur d'avions selon l'une des revendications 14 à 21, caractérisé en ce que la pelle (28) comporte un rebord de passage (62) dirigé vers la roue avant (24), incliné vers la voie de circulation (40) et de préférence revêtu d'une matière plastique résistant à l'usure.

23. Remorqueur d'avions selon l'une des revendications 14 à 22, caractérisé en ce que la pelle (28) présente une surface d'arrêt (60) en forme de clavette ou à courbure concave pour la roue avant (24) posée sur la pelle (28), qui dépasse de la surface supérieure (58) de ladite pelle.

24. Remorqueur d'avions selon l'une des revendications 14 à 23, caractérisé en ce qu'il comprend au moins un rouleau de butée (34) avec un axe de rotation orienté transversalement par rapport à l'axe longitudinal du remorqueur d'avions (10), qui est disposé dans la région de l'évidement (20), et appliqué, dans la position de butée, contre une partie de la surface de roulement (70) de la roue avant (24) dirigée vers le remorqueur d'avions (10).

25. Remorqueur d'avions selon la revendication 24, caractérisé en ce que les rouleaux de butée (34) sont montés par paires de manière à pouvoir pivoter sur une fixation (32) autour d'un axe (72) parallèle à l'axe de rotation desdits rouleaux de butée.

26. Remorqueur d'avions selon la revendication 25, caractérisé en ce que le rouleau de butée (34) et respectivement la fixation (32) des rouleaux de butée (34) peut effectuer un mouvement limité dans la direction de butée.

27. Remorqueur d'avions selon l'une des revendications 25 ou 26, caractérisé en ce que le rouleau de butée (34) et respectivement la fixation (32) des rouleaux de butée (34) peut être déplacé par rapport à un amortisseur (78) qui comporte de préférence au moins un capteur de pression pour la mesure des forces agissant sur le rouleau de butée (34) et respectivement sur la fixation (32).

28. Remorqueur d'avions selon l'une des revendications 25 à 27, caractérisé en ce que le rouleau de butée (34) et respectivement la fixation (32) des rouleaux de butée (34) est monté sur le système de préhension et respectivement de fixation (29).

29. Remorqueur d'avions selon l'une des revendications 14 à 28, caractérisé en ce qu'il comprend au moins un bras de préhension (36) qui peut pivoter derrière la roue avant (24) placée à l'intérieur de l'évidement (20), et qui est muni d'au moins un rouleau de pression (68) tournant lequel peut être appliqué contre la surface de roulement (70) de la roue avant (24).

30. Remorqueur d'avions selon la revendication 29, caractérisé en ce que des deux côtés de l'évidement (20), un bras de préhension (36) est articulé sur un support de bras de préhension (85) de manière à pouvoir pivoter respectivement autour d'un axe vertical (84).

31. Remorqueur d'avions selon la revendication 30, caractérisé en ce que les deux bras de préhension (36) pivotés derrière la roue avant (24) peuvent être verrouillés l'un avec l'autre.

32. Remorqueur d'avions selon l'une des revendications 30 ou 31, caractérisé en ce que les bras de préhension (36) peuvent être déplacés en direction du rouleau de butée (34).

33. Remorqueur d'avions selon l'une des revendications 30 à 32, caractérisé en ce que les supports de bras de préhension (85) sont montés sur deux longerons de support (30, 30') du système de préhension et respectivement de fixation (29), qui peuvent être relevés et abaissés et sont orientés parallèlement aux faces latérales de la roue avant (24) de l'avion placée dans l'évidement (20).

34. Remorqueur d'avions selon la revendication 33, caractérisé en ce que les supports de bras de préhension (85) sont montés de manière mobile dans le sens longitudinal dans des guidages (76) des longerons de support (30, 30').

35. Remorqueur d'avions selon l'une des revendications 33 ou 34, caractérisé en ce que le rouleau de butée (34) et respectivement la fixation (32) des rouleaux de butée (34) sont montés de manière à pouvoir effectuer un déplacement limité dans les guidages (76) des longerons de support (30, 30').

36. Remorqueur d'avions selon l'une des revendications 33 à 35, caractérisé en ce que les longerons de support (30, 30') sont montés de manière réglable en hauteur, de préférence pivotante, dans la fourche de levage (26).

37. Remorqueur d'avions selon l'une des revendications 33 à 36, caractérisé en ce que les supports de bras de préhension (85) peuvent être reliés chacun par au moins un vérin de serrage (80) télescopique à commande hydraulique, au rouleau de butée (34) ou à la fixation (32) des rouleaux de butée (34).

38. Remorqueur d'avions selon la revendication 37, caractérisé en ce que le vérin de serrage (80) comporte au moins un capteur de pression.

39. Remorqueur d'avions selon l'une des revendications 19 à 38, caractérisé en ce que la fourche de levage (26) est divisée en deux parties, et que, lorsque la fourche de levage (26) est relevée, la partie postérieure qui porte la pelle peut tourner de manière amortie ou commandée autour d'un axe de rotation (110) sensiblement parallèle à l'axe longitudinal du remorqueur d'avions, par rapport à la partie antérieure articulée sur le châssis.

40. Remorqueur d'avions selon l'une des revendications 14 à 39, caractérisé en ce qu'il comprend au moins une paire de roues d'appui qui, lors de l'accouplement du remorqueur d'avions (10) et de la roue avant (24), peuvent être pivotées mécaniquement ou hydrauliquement entre le châssis (12) et la voie de circulation (40), dont la surface de roulement est située à distance de la voie de circulation et qui empêchent un basculement du remorqueur d'avions (10) lors d'un dommage causé aux pneumatiques ou à l'essieu.

41. Remorqueur d'avions (10) avec un châssis (12) qui présente un évidement (20) en forme de fourche ainsi qu'avec une pelle (28) montée dans la région de l'évidement (20), qui peut être relevée et abaissée pour la prise en charge d'un train d'atterrissage avant d'un avion avec au moins une roue avant (24) qui, sur la voie de circulation (40), est rapprochée du remorqueur d'avions (10) jusque dans une position de butée, la pelle (28) formant avec sa surface supérieure (58) une surface d'appui pour le transport de la roue avant (24) soulevée, et la pelle (28) pouvant être abaissée avec la surface d'appui jusqu'à proximité du sol, caractérisé en ce que, lorsque le remorqueur d'avions (10) est à l'arrêt, la pelle (28) peut être déplacée par rapport au châssis (12) dudit remorqueur d'avions et passée entièrement sous la roue avant (24).

42. Remorqueur d'avions selon la revendication 41, caractérisé en ce qu'il comprend au moins une butée (32, 36') qui est appliquée contre la roue avant (24) soulevée et immobilise ladite roue avant (24) sur la pelle (28).
